# EUROPÄISCHE PATENTSCHRIFT

(11) **EP 1 630 643 B1**
(45) Veröffentlichungstag und Bekanntmachung des Hinweises auf die Patenterteilung: **08.10.2008**
(21) Anmeldenummer: 05107654.5
(22) Anmeldetag: 19.08.2005
(51) Int. Cl.: G06F 1/18, G06F 1/16

(54) **Doppelwandgehäuse für Industrie-Panels und Panel-PC's**
Double-walled housing for industrial panels and panel-PCs
Boîtier à double paroi pour panneaux industriels et panel PCs

(30) Priorität: 27.08.2004 DE 102004041826
(43) Veröffentlichungstag der Anmeldung: 01.03.2006
(73) Patentinhaber: SIEMENS AKTIENGESELLSCHAFT, 80333 München (DE)
(72) Erfinder: Kurrer, Siegfried, 90449 Nürnberg (DE)

(56) Entgegenhaltungen:
- EP-A2- 0 683 026
- US-A- 6 144 552
- US-B1- 6 317 314
- US-B1- 6 654 078

## Beschreibung

Die Erfindung betrifft ein Gehäuse zur Aufnahme eines Bedienfeldes und/oder eines Rechners mit Bedienoberfläche.

Für den Einbau von Bedienoberflächen, Panels oder Bedienfeldern werden in der Regel Gehäuse, deren Rahmen aus Kunststoff oder Metall oder einer Kombination von beiden besteht, verwendet. Hierbei können für kleine Bedienfelder bzw. Displays Gehäuse verwendet werden, die ausschließlich aus Kunststoff bestehen. Bei größeren Displays bzw. Bedienfeldern muss jedoch aufgrund der mangelnden Stabilität des Kunststoffs entweder auf eine Verstärkung aus Metall zurückgegriffen werden, bei der in der Regel ein Metallrahmen verwendet wird, auf welchen die Kunststoffteile aufgebracht werden. Alternativ kann auch der gesamte Rahmen aus einem Metall, wie beispielsweise Aluminium hergestellt werden.

Die Herstellung derartiger Rahmen, die teilweise oder ganz aus Metall bestehen, ist jedoch relativ aufwendig und teuer. Zudem müssen die Rahmen nach ihrer Herstellung noch entsprechend lackiert werden. Bei der reinen Verwendung von Kunststoff ist dieser Arbeitsschritt der nachfolgenden Lackierung nicht nötig. Eine Herstellung eines Gehäuses ausschließlich aus Kunststoff ist aus diesem Grund wünschenswert.

Die Aufgabe der vorliegenden Erfindung besteht daher darin, ein Gehäuse für ein Bedienfeld, bzw. ein Display oder einen Panel-PC anzugeben, welches aus Kunststoff bestehend auch bei großem Fensterausschnitt die nötige Stabilität aufweist.

Die Aufgabe wird gelöst durch ein Gehäuse zur Aufnahme eines Bedienfelds und/oder eines Rechners mit Bedienoberfläche, wobei das Gehäuse im Wesentlichen aus Kunststoff ausgebildet ist, wobei das Gehäuse im Wesentlichen einen Rahmen um die Seitenflächen des Bedienfelds und/oder der Bedienoberfläche bildet und wobei der Rahmen durch mindestens zwei, im Wesentlichen parallele, miteinander verbundene Wände ausgebildet ist, von denen eine erste Wand innerhalb einer zweiten Wand angeordnet ist.

Der Erfindung liegt die Erkenntnis zugrunde, das bei einer doppelwandigen Ausbildung eines Kunststoffsgehäuses, wobei die beiden Wände ineinander liegen und miteinander verbunden sind, eine ausreichende Stabilität erzielt werden kann, so dass selbst bei großer Fenstergröße eines Displays bzw. eines Bedienfelds auf einen Rahmen aus Metall zur Sicherung der Stabilität verzichtet werden kann. Hierbei stabilisieren sich die ineinander liegenden beiden Wände aus Kunststoff gegenseitig. Ein derartiges Gehäuse ist trotz der nötigen Stabilität relativ leicht und durch den Verzicht auf Metallteile preiswerter in der Herstellung.

Eine weitere vorteilhafte Ausbildung der Erfindung besteht darin, dass die im Wesentlichen parallelen Wände durch Verstrebungen und/oder Verrippungen einstückig miteinander verbunden sind. Durch die Verbindung der beiden Wände mittels Verstrebungen bzw. Verrippungen aus Kunststoff wird eine weitere erhöhte Stabilität erzielt. Hierbei sind die Wände einstückig miteinander verbunden, so dass der Rahmen auf relativ einfache Weise im Spritzgussverfahren hergestellt werden kann.

Eine weitere vorteilhafte Ausbildung der Erfindung besteht darin, dass die Verbindungen und/oder Verrippungen im Wesentlichen rechtwinklig und/oder im Wesentlichen in einem Winkel von 35 bis 55° zu den Wänden ausgebildet sind. Die Wände können somit entweder durch rechtwinklige Streben miteinander verbunden sein. In diesem Fall können zwischen den Verstrebungen bzw. den Verrippungen innerhalb der Wände senkrechte Öffnungen angebracht sein, welche insbesondere zur Lüftung dienen. Alternativ können die Verstrebungen bzw. Verrippungen auch schräg zwischen den Wänden angeordnet sein, beispielsweise in einem Winkel von etwa 45°. Hierdurch wird noch eine höhere Stabilität erzielt. In diesem Fall sind die beiden Wände durchgehend, das heißt sie sind nicht durch Öffnungen unterbrochen. Eine Belüftung kann in diesem Fall nicht erfolgen. Wenn die Bauteile des Geräts insgesamt nicht zu warm werden, kann der Rahmen durchgängig mit schrägen Verrippungen bzw. Verbindungen ausgebildet sein. Ein Rahmen kann sowohl schräge als auch rechtwinklige Verrippungen aufweisen. Hierdurch können an bestimmten Stellen des Rahmens Lüftungen angebracht werden, während andere Stellen des Rahmens durch schräge Verrippung für eine erhöhte Stabilität sorgen.

Eine weitere vorteilhafte Ausbildung der Erfindung besteht darin, dass die Verbindungen und/oder Verrippungen quer und/ oder längs zu den Wänden angeordnet sind. Je nach Ausrichtung des Rahmens kann somit eher eine in Längsrichtung ausgerichtete Stabilität oder eine in Querrichtung ausgerichtete Stabilität bewirkt werden. Entsprechend können dann die Lüftungsschlitze auch in Längs- oder Querrichtung des Rahmens, je nach Bedarf angeordnet sein.

Eine weitere vorteilhafte Ausbildung der Erfindung besteht darin, dass der Rahmen im Wesentlichen rechtwinklig, quadratisch, rund und/oder elliptisch ausgebildet ist. Hierdurch können unterschiedliche Formen von Bedienfeldern bzw. Displays durch den entsprechenden Rahmen in ein Gehäuse eingebunden werden.

Eine weitere vorteilhafte Ausbildung der Erfindung besteht darin, dass der Rahmen Ansatzstellen für Spanner aufweist. Der Rahmen hat an definierten Punkten Ansatzstellen für Spanner, welche für eine Befestigung des Gehäuses bzw. des gesamten in das Gehäuse integrierte Schaltfeld bzw. den Panel-PC sorgen. Diese Ansatzstellen für die Spanner sind direkt im Rahmen angeordnet, so dass das gesamte Gehäuse vorteilhaft befestigt werden kann.

Eine weitere vorteilhafte Ausbildung der Erfindung besteht darin, dass der Rahmen Bohrungen zur Verschraubung in der Nähe der Ansatzstellen für die Spanner aufweist. Hierdurch wird bei der Verschraubung der Abdeckplatte in der unmittelbaren Nähe der Ansatzstellen für die Spanner eine weitere erhöhte Stabilität erreicht.

Eine weitere vorteilhafte Ausbildung der Erfindung besteht darin, dass der Rahmen eine Frontblende aufweist. Hierdurch kann das Display bzw. das Bedienfeld direkt in den Rahmen eingelassen werden und die vorderseitige Abdeckung verfügt somit ebenfalls über die durch den Rahmen vorgegebene Stabilität.

Eine weitere vorteilhafte Ausbildung der Erfindung ist dadurch gekennzeichnet, dass die außen liegende Wand auf der der Blende gegenüber liegenden Seite des Rahmens über die innen liegende Wand hinausragt. Beim Anbringen des Abdeckblechs kann somit eine innere Vertiefung derart ausgenutzt werden, dass das Abdeckblech quasi auf einer Höhe mit der äußeren Wand abschließt. Das Abdeckblech wird sozusagen durch die Vertiefung in den Rahmen eingelassen.

Eine weitere vorteilhafte Ausbildung der Erfindung besteht darin, dass der Rahmen zwischen den Wänden Vertiefungen zur Aufnahme eines gefalzten Abdeckblechs aufweist, wobei die Vertiefungen asymmetrisch angeordnet sind. Weist ein Abdeckblech beispielsweise nur an einer Seite Vertiefungen auf, bzw. an bestimmten Stellen, welche nicht symmetrisch angeordnet sind, so kann durch die entsprechenden Vertiefungen im Rahmen sichergestellt werden, dass das Abdeckblech in einer eineindeutigen Position in den Rahmen eingelassen wird bzw. auf dem Rahmen festgeschraubt wird. Eine falsche Montage des Abdeckblechs in bzw. auf dem Rahmen wird hierdurch verhindert.

Eine weitere vorteilhafte Ausbildung der Erfindung besteht darin, dass der Rahmen derart angeordnete Bohrungen aufweist, dass eine Fixierung des Abdeckblechs durch Aufsetzen des die Platine enthaltenden rückwandigen Deckels erfolgt. Auf diese Weise kann das Abdeckblech einfach auf dem Rahmen fixiert werden, ohne dass eine vorläufige Fixierung des Abdeckblechs bzw. eine zweifache Fixierung des Abdeckblechs und des rückwandigen Deckels notwendig ist. Mit Hilfe einer gleichseitig den rückwandigen Deckel sowie das Abdeckblech fixierenden Verschraubung kann somit ein Montagearbeitsgang eingespart werden.

Insgesamt können durch die Verwendung eines aus Kunststoff bestehenden Gehäuserahmens die Produktionskosten erheblich gesenkt werden, da kostengünstigeres material verwendet werden kann, das sich auch leichter verarbeiten lässt. Ein Produktionsschritt der Lackierung des fertigen Gehäuses entfällt, da der Kunststoff gleich in der entsprechenden Farbe hergestellt werden kann. Das fertige Gerät ist wesentlich leichter und somit leichter einzubauen. Im Gegensatz zu Gehäusen mit Metallanteilen treten keine Klimaprobleme zwischen Kunststoff, Glas und Folie auf.

Im Folgenden wird die Erfindung durch die in den Figuren dargestellten Ausführungsbeispiele näher beschrieben und erläutert.

Es zeigen:
- FIG 1: ein Gehäuse mit einem Doppelwandrahmen,
- FIG 2: eine Detailansicht des Doppelwandrahmens,
- FIG 3: eine Detailansicht des Doppelwandrahmens,
- FIG 4: die Ansatzstelle für die Spanner,
- FIG 5: einen Querschnitt durch den Doppelwandrahmen,
- FIG 6: ein fertig montiertes Display bzw. ein Bedienfeld oder einen Panel-PC,
- FIG 7: eine Explosionsdarstellung eines Panel-PC's bzw. eines Bedienfelds.

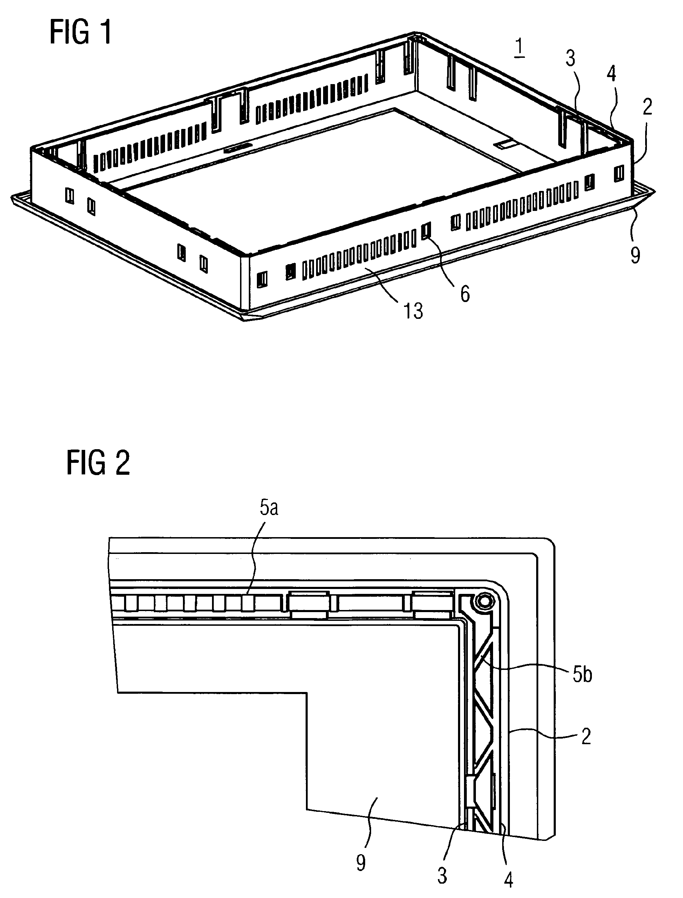

FIG 1 zeigt ein Gehäuse 1 mit einem Doppelwandrahmen 2, welcher aus einer inneren Wand 3 und einer äußeren Wand 4 besteht. Die Wände 3, 4 sind im Wesentlichen parallel zueinander angeordnet. Das Gehäuse weist frontseitig eine Blende 9 auf. Der Rahmen 2 weist an einigen Stellen Lüftungsschlitze 13 auf. Ebenfalls weist der Rahmen 2 Ansatzstellen 6 für die Spanner 7 zur Befestigung in einer Wand auf.

FIG 2 zeigt eine Detailansicht des Rahmens 2, bei dem die Wände 3 und 4 durch Verstrebungen bzw. Verrippungen 5a, 5b miteinander verbunden sind. Der Rahmen 2 besteht hierbei im Wesentlichen aus Kunststoff. Der Rahmen weist frontseitig eine Blende 9 auf. Die Verstrebungen bzw. Verbindungen zwischen den Wänden 3, 4 können hierbei rechtwinklig zu den Wänden 5a bzw. im Wesentlichen in einem Winkel von 45° 5b zu den Wänden verlaufen. Durch die Verrippungen bzw. Verbindungen zwischen den beiden Wänden 3, 4 erreicht der doppelwandige Rahmen 2 eine erhöhte Stabilität.

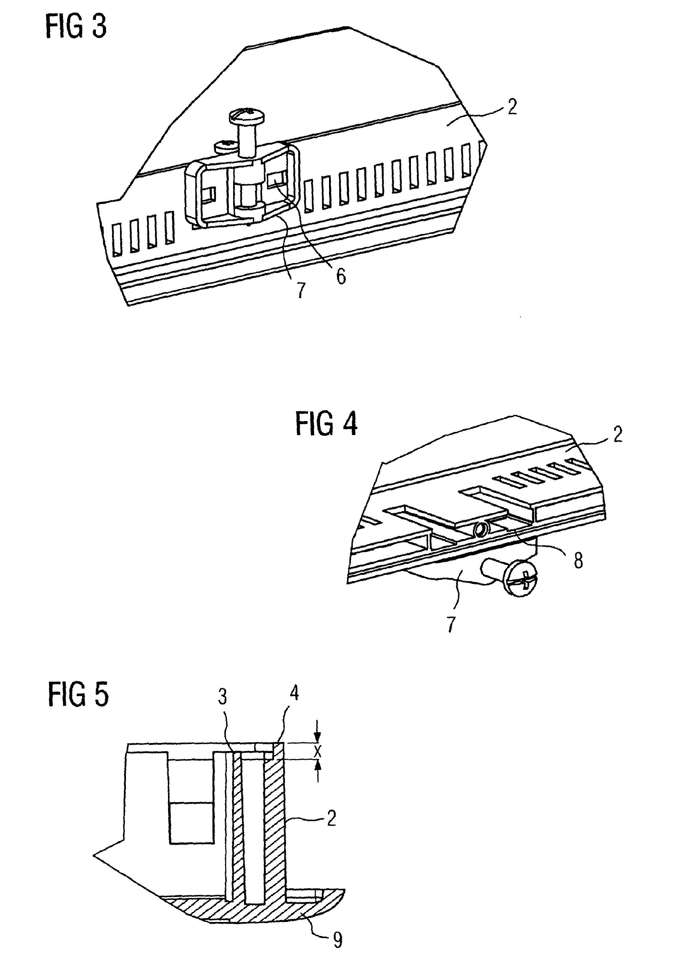

FIG 3 zeigt eine weitere Detaildarstellung des doppelwandigen Rahmens 2. Der Rahmen ist in Außenansicht dargestellt. Der Rahmen weist Öffnungen 6 bzw. Ansatzstellen für Spanner 7 auf, wobei die Spanner zur Befestigung des Rahmens in der Wand dienen.

FIG 4 zeigt die Ansatzstelle für die Spanner 7 im Rahmen 2 in Draufsicht. In der Nähe der Ansatzstellen für die Spanner 7 ist jeweils eine Bohrung 8 angeordnet. Diese Bohrung dient zur Verschraubung des Abdeckblechs 10 bzw. zum Aufsetzen des rückwandigen Deckels 12. Durch die räumliche Nähe der Ansatzstellen für die Spanner 7 und der Bohrung 8 für den rückwandigen Deckel 12 bzw. das Abdeckblech 10 wird eine erhöhte Stabilität des Rahmens bei Einsetzen in die Wand erzielt.

FIG 5 zeigt einen Querschnitt durch den Rahmen 2 des Gehäuses 1. Der Rahmen 2 besteht aus der inneren Wand 3 und der äußeren Wand, welche über die Frontblende 9 miteinander verbunden sind. Die äußere Wand 4 überragt die innere Wand 3 am der Frontblende 9 gegenüber liegenden Ende um eine Länge x. Hierdurch kann bei Aufsetzen des Abdeckblechs 10 bzw. des rückseitigen Deckels 12 die Vertiefung, die durch die innenseitige Wand 3 gebildet wird, optimal ausgenutzt werden, so dass der Abdeckdeckel 10 quasi in den Rahmen eingelassen wird.

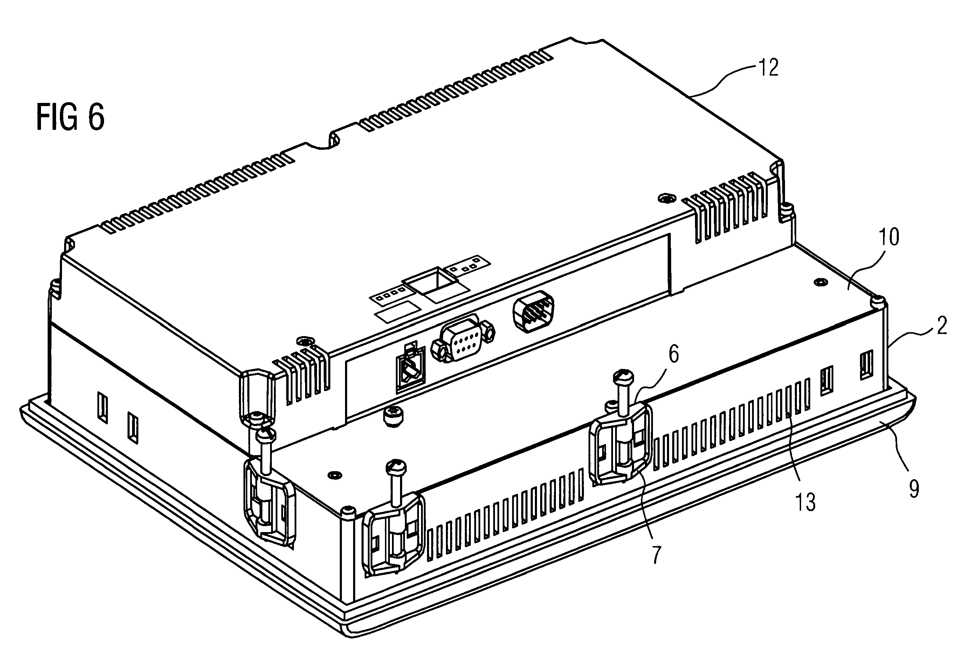

FIG 6 zeigt ein fertig montiertes Display bzw. ein Bedienfeld oder einen Panel-PC. Auf den Rahmen 2 mit der Frontblende 9 wird rückwandig ein Abdeckblech aufgesetzt bzw. in den Rahmen eingelassen. Das Abdeckblech wird über Schrauben an den Bohrungen 8 verschraubt, welche in räumlicher Nähe zu den Ansatzstellen 6 für die Spanner 7 angeordnet sind. Desgleichen wird der rückwandige Deckel 12 an den entsprechend in der Nähe der Ansatzstellen 6 für die Spanner 7 angeordneten Bohrungen 8 verschraubt.

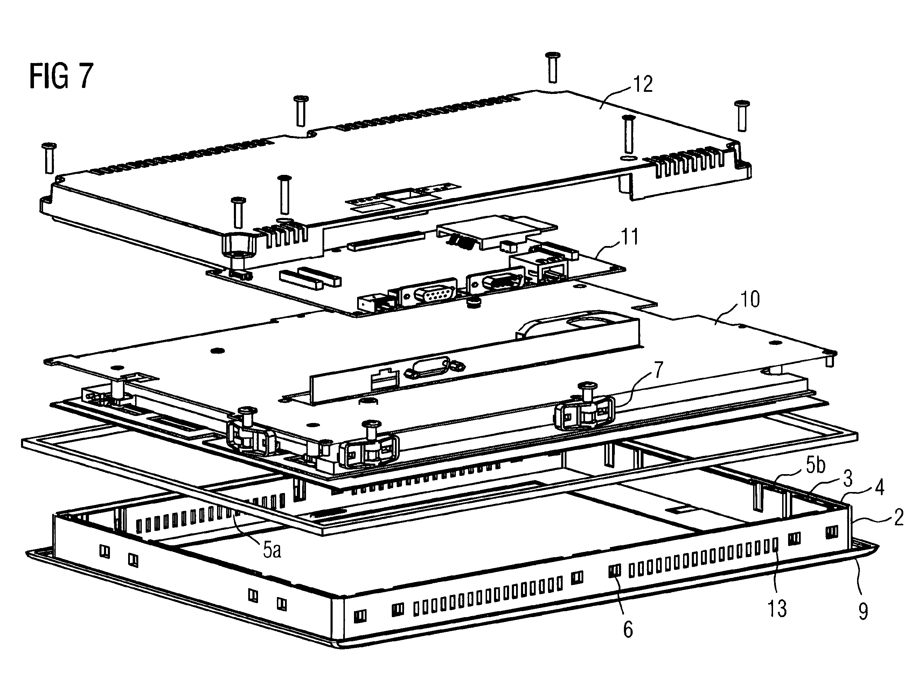

FIG 7 stellt eine Explosionsdarstellung eines Panel-PC's bzw. eines Bedienfelds oder einer Bedienoberfläche nach dem erfindungsgemäßen System dar. In den Rahmen 2 mit der Frontblende 9 wird das Abdeckblech 10 derart eingelassen, dass es über die Bohrungen 8 verschraubt wird. Dadurch dass die innere Wand 3 tiefer ausgebildet ist als die äußere Wand 4 kann das Abdeckblech 10 in den Rahmen versenkt werden. Der Rahmen weist Öffnungen 13 für die Lüftung auf. Die innere und die äußere Wand 3, 4 des Rahmens 2 sind durch Verstrebungen 5 fest miteinander verbunden. Die Verstrebungen 5 sorgen für eine Verstärkung des Rahmens. Die Verstrebungen können rechtwinklig 5a zu den Wänden ausgebildet sein oder im Wesentlichen schräg in einem Winkel zwischen 35° und 55° 5b. Bei der schrägen Ausbildung der Verstrebungen werden keine Lüftungsöffnungen in den Rahmen eingebracht. Mittels Spanner 7 wird das gesamte Gehäuse bzw. das Bedienfeld oder das Display in der Wand befestigt. Als weiteres Element wird der rückwandige Deckel 12, welcher eine Platine abdeckt, auf das rückwandige Blech bzw. direkt in den Rahmen 2 eingeschraubt.

## Patentansprüche

1. Gehäuse zur Aufnahme eines Bedienfelds und/oder eines Rechners mit Bedienoberfläche,
wobei das Gehäuse im Wesentlichen aus Kunststoff ausgebildet ist,
wobei das Gehäuse (1) im Wesentlichen einen Rahmen (2) um die Seitenflächen des Bedienfelds und/oder der Bedienoberfläche bildet und
wobei der Rahmen (2) durch mindestens zwei, im Wesentlichen parallele, miteinander verbundene Wände (3, 4) ausgebildet ist, von denen eine erste Wand (3) innerhalb einer zweiten Wand (4) angeordnet ist.

2. Gehäuse nach Anspruch 1, bei dem die im Wesentlichen parallelen Wände (3, 4) durch Verstrebungen und/oder Verrippungen (5) einstückig miteinander verbunden sind.

3. Gehäuse nach Anspruch 1 oder 2, bei dem die Verbindungen und/oder Verrippungen im Wesentlichen rechtwinklig (5a) und/oder im Wesentlichen in einem Winkel von 35° bis 55° (5b) zu den Wänden (3, 4) ausgebildet sind.

4. Gehäuse nach einem der vorhergehenden Ansprüche, bei dem die Verbindungen und/oder Verrippungen (5) quer und/oder längs zu den Wänden (3, 4) angeordnet sind.

5. Gehäuse nach einem der vorhergehenden Ansprüche, bei dem der Rahmen (2) im Wesentlichen rechtwinklig, quadratisch, rund und/oder elliptisch ausgebildet ist.

6. Gehäuse nach einem der vorhergehenden Ansprüche, bei dem der Rahmen (2) Ansatzstellen (6) für Spanner (7) aufweist.

7. Gehäuse nach Anspruch 6, bei dem der Rahmen (2) Bohrungen (8) zur Verschraubung in der Nähe der Ansatzstellen (6) für die Spanner (7) aufweist.

8. Gehäuse nach einem der vorhergehenden Ansprüche, bei dem der Rahmen (2) eine Frontblende (9) aufweist.

9. Gehäuse nach einem der vorhergehenden Ansprüche, bei dem die außen liegende Wand (4) auf der der Blende (9) gegenüber liegenden Seite des Rahmens (2) über die innen liegende Wand (3) herausragt (x).

10. Gehäuse nach einem der vorhergehenden Ansprüche, bei dem der Rahmen (2) zwischen den Wänden (3, 4) Vertiefungen zur Aufnahme eines gefalzten Abdeckblechs (10) aufweist, wobei die Vertiefungen asymmetrisch angeordnet sind.

11. Gehäuse nach einem der vorhergehenden Ansprüche, bei dem der Rahmen (2) derart angeordnete Bohrungen aufweist, dass eine Fixierung des Abdeckblechs (10) durch Aufsetzen des insbesondere eine Platine (11) enthaltenden rückwandigen Deckels (12) erfolgt.

12. Bedienfeld und/oder Rechner mit Bedienoberfläche mit einem Gehäuse nach einem der Ansprüche 1 bis 11.

## Claims

1. Housing for accommodating an operating panel and/or a computer with operator interface,
the housing being essentially formed of plastic,
the housing (1) essentially forming a frame (2) around the lateral surfaces of the operating panel and/or the operator interface and
the frame (2) being formed by at least two, essentially parallel, interconnected walls (3, 4), of which a first wall (3) is arranged within a second wall (4).

2. Housing according to claim 1, in which the essentially parallel walls (3, 4) are interconnected in one piece by struts and/or ribs (5).

3. Housing according to claim 1 or 2, in which the connections and/or ribs are essentially formed at right angles (5a) and/or essentially at an angle of 35° to 55° (5b) to the walls (3, 4).

4. Housing according to one of the preceding claims, in which the connections and/or ribs (5) are arranged transversely and/or lengthwise to the walls (3, 4).

5. Housing according to one of the preceding claims, in which the frame (2) is essentially formed as a rectangle, a square, a circle and/or an ellipse.

6. Housing according to one of the preceding claims, in which the frame (2) has lugs (6) for tensioners (7).

7. Housing according to claim 6, in which the frame (2) has holes (8) for screw fitting in the vicinity of the lugs (6) for the tensioners (7).

8. Housing according to one of the preceding claims, in which the frame (2) has a front panel (9).

9. Housing according to one of the preceding claims, in which the external wall (4) projects (x) out over the internal wall (3) on the side of the frame (2) opposite the panel (9).

10. Housing according to one of the preceding claims, in which the frame (2) has depressions between the walls (3, 4) for accommodating a seamed cover plate (10), the depressions being arranged asymmetrically.

11. Housing according to one of the preceding claims, in which the frame (2) has holes arranged such that the cover plate (10) is fixed by attaching the back-wall cover containing in particular a printed circuit board (11).

12. Operating panel and/or computer with operator interface with a housing according to one of claims 1 to 11.

## Revendications

1. Boîtier de réception d'un panneau de commande et/ou d'un ordinateur ayant une surface de commande,
dans lequel le boîtier est essentiellement en matière plastique,
dans lequel le boîtier (1) forme essentiellement un cadre (2) autour des surfaces latérales du panneau de commande et/ou de la surface de commande et
dans lequel le cadre (2) est formé par au moins deux parois (3, 4) sensiblement parallèles reliées entre elles et dont une première paroi (3) est disposée à l'intérieur d'une deuxième paroi (4).

2. Boîtier suivant la revendication 1, dans lequel les parois (3, 4) sensiblement parallèles sont reliées entre elles d'un seul tenant par des entretoisements et/ou des nervurages (5).

3. Boîtier suivant la revendication 1 ou 2, dans lequel les liaisons et/ou les nervurages font, avec les parois (3, 4) sensiblement un angle droit (5a) et/ou sensiblement un angle de 35° à 55° (5b).

4. Boîtier suivant l'une des revendications précédentes, dans lequel les liaisons et/ou les nervurages (5) sont disposés transversalement et/ou longitudinalement aux parois (3, 4).

5. Boîtier suivant l'une des revendications précédentes, dans lequel le cadre (2) est sensiblement rectangulaire, carré, circulaire et/ou elliptique.

6. Boîtier suivant l'une des revendications précédentes, dans lequel le cadre (2) a des points (6) d'adjonction pour des tendeurs (7).

7. Boîtier suivant la revendication 6, dans lequel le cadre (2) a des trous (8) de vissage à proximité des points (6) d'adjonction pour les tendeurs (7).

8. Boîtier suivant l'une des revendications précédentes, dans lequel le cadre (2) a un cadre (9) avant.

9. Boîtier suivant l'une des revendications précédentes, dans lequel la paroi (4) extérieure dépasse (x) de la paroi (3) intérieure du côté du cadre (2) opposé au cadre (9) avant.

10. Boîtier suivant l'une des revendications précédentes, dans lequel le cadre (2) a, entre les parois (3, 4), des évidements de réception d'une tôle (10) pliée de couverture, les évidements étant disposés dissymétriquement.

11. Boîtier suivant l'une des revendications précédentes, dans lequel le cadre (2) a des trous disposés de manière à ce qu'une immobilisation de la tôle (10) de couverture se produise lors de la pose du couvercle (12) de paroi arrière comportant notamment une platine (11).

12. Panneau de commande et/ou ordinateur ayant une surface de commande comprenant un boîtier suivant l'une des revendications 1 à 11.
